# EUROPÄISCHE PATENTSCHRIFT

(11) **EP 3 427 315 B1**
(45) Veröffentlichungstag und Bekanntmachung des Hinweises auf die Patenterteilung: **03.11.2021**
(21) Anmeldenummer: 17725170.9
(22) Anmeldetag: 22.05.2017
(51) Int. Cl.: H01M 50/147, H01M 50/15, H01M 50/543, H01M 10/48, H01M 10/42, H01M 50/60, H01M 50/155

(54) **VERSCHLUSSDECKEL EINER BATTERIEZELLE**
CLOSURE COVER OF A BATTERY CELL
COUVERCLE DE FERMETURE D'UNE CELLULE DE BATTERIE

(30) Priorität: 29.06.2016 DE 102016007861
(43) Veröffentlichungstag der Anmeldung: 16.01.2019
(73) Patentinhaber: Frötek- Vermögensverwaltung GmbH, 37520 Osterode am Harz (DE)
(72) Erfinder: DRÖßLER, Marcel, 37345 Sonnenstein (DE); VOIGT, Jan Hagen, 38518 Gifhorn (DE); MATHES, Sebastian, 37589 Kalefeld (DE)
(74) Vertreter: Cohausz Hannig Borkowski Wißgott
(86) Internationale Anmeldenummer: PCT/EP2017/000609
(87) Internationale Veröffentlichungsnummer: WO 2018/001540

(56) Entgegenhaltungen:
- EP-A1- 0 709 910
- EP-A2- 0 474 003
- DE-A1- 3 331 360
- DE-A1- 4 412 068
- DE-T2- 69 426 137
- DE-U1- 20 207 721

## Beschreibung

Die Erfindung betrifft einen Verschlussdeckel über mindestens einer Batteriezelle einer Industriebatterie insbesondere einer Antriebsbatterie mit mindestens zwei Polöffnungen zur Durchführung der Batteriepole und mit einem elektrischen Verbraucher in oder an dem Verschlussdeckel.

Aus der DE 195 45 833 B4 ist es bekannt, bei einer Batterie mit mehreren hintereinander geschalteten Einzelzellen jede Einzelzelle mit einem elektrischen Modul zu verbinden, wobei die Module wiederum mit einer Zentraleinheit verbunden sind. Hierbei sind die Einzelzellenmodule aus der jeweiligen Einzelzelle heraus über elektrische Leitungen mit elektrischer Energie versorgt. Die Einzelzellenmodule weisen hierbei gedruckte Schaltungen auf, die über elektrische Leitungen mit den Polen der jeweiligen Einzelzelle verbunden sind. Ferner sind die elektrischen Leitungen zwischen dem Modul und der Einzelzelle mechanischen Beschädigungen ausgesetzt.

Aus der EP 0 709 910 A1 ist es an sich bekannt, einen Verschlussdeckel einer Batteriezelle mit Leitungen aus einem elektrisch leitendem Kunststoff zu versehen. Ferner ist es aus der DE 33 31 360 A1 bekannt, den Gehäusedeckel einer Batterie mit einem Uhrenchip zu versehen, der mit den Batteriepolen über Leitlackbahnen verbunden ist. Weitere relevante Dokumente sind: EP 0 474 003 A2, DE 202 07 721 U1, DE 694 26 137 T2 und DE 44 12 068 A1.

Aufgabe der Erfindung ist es, einen Verschlussdeckel zu schaffen, dessen Messsensoren an elektrische Leitungen angeschlossen sind, die gegen mechanische Beschädigungen gesichert sind, so dass die elektrische Stromversorgung einfacher Konstruktion und ohne zusätzlichen Kontaktierungsaufwand bei hoher Kontaktsicherheit frei von Unterbrechungen ist. Hierbei sollen die Leitungen bei einfacher Herstellung eine hohe Stabilität aufweisen.

Diese Aufgabe wird erfindungsgemäß dadurch gelöst,
- dass zwischen einer ersten Polöffnung einer Polarität und dem elektrischen Verbraucher und zwischen einer zweiten Polöffnung der anderen Polarität und dem elektrischen Verbraucher jeweils eine elektrische Leitung auf, unter oder in dem Verschlussdeckel angeordnet ist, die die Pole der Batteriezelle mit dem elektrischen Verbraucher elektrisch verbinden, um den elektrischen Verbraucher mit elektrischer Energie zu versorgen,
- dass die elektrischen Leitungen an Kontaktierungsringen angeschlossen sind, die in den Polöffnungen einliegen,
- und dass die elektrischen Leitungen als elektrische Leiter einen elektrisch leitfähigen Kunststoff aufweisen,
- dass der elektrische Verbraucher in einem Wassernachfüllstopfen angeordnet ist, der in einer weiteren Öffnung des Verschlussdeckels einliegt.

Hierdurch wird ermöglicht, dass der Wassernachfüllstopfen elektrisch steuerbar ist.

Bei einer solchen Lösung sind zudem die elektrischen Leitungen zwischen den Polen der Einzelzelle und dem elektrischen Verbraucher gegen Unterbrechungen gesichert, da die elektrischen Leitungen in oder auf dem Verschlussdeckel sicher geführt sind. Hierbei ist auch eine hohe Kontaktsicherheit der Enden der elektrischen Leitungen gegeben. Auch ist hierbei von Bedeutung, dass die elektrischen Leitungen auf der Unterseite, auf der Oberseite und/oder innerhalb des Verschlussdeckels verlaufen und dass die elektrischen Leitungen als elektrische Leiter einen elektrisch leitfähigen Kunststoff aufweisen, so dass eine hohe Stabilität der Leitungen und eine einfachere Herstellung werden erreicht werden.

Vorzugsweise wird vorgeschlagen, dass die elektrischen Leitungen auf der Unterseite, auf der Oberseite und/oder innerhalb des Verschlussdeckels verlaufen. In der Regel weist der elektrische Verbraucher einen Messsensor auf.

Vorzugsweise sind die elektrischen Leitungen als Leitungskabel oder Leitungsband mit einem isolierenden Mantel versehen sind. Alternativ wird vorgeschlagen, dass die elektrischen Leitungen als Leitungskabel oder Leitungsband keinen isolierenden Mantel aufweisen.

Vorzugsweise wird vorgeschlagen, dass ein Ende oder beide Enden der elektrischen Leitungen tangential an den Öffnungen anliegen.

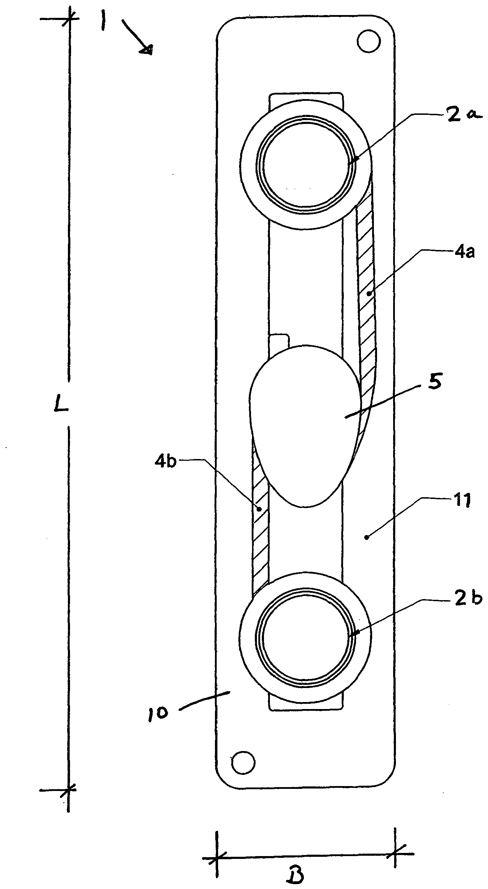

Ein Ausführungsbeispiel eines erfindungsgemäßen Verschlussdeckels einer Batterieeinzelzelle ist in der einzigen Figur in einer Ansicht von unten dargestellt und wird im Folgenden näher beschrieben.

Der erfindungsgemäße Verschlussdeckel 1 einer Batterieeinzelzelle besteht aus Kunststoff und weist die Form einer länglich gestalteten Platte 11 auf mit einer waagerechten scheibenförmigen Unterseite 10, deren Länge L und Breite B der Länge und der Breite der Batteriezellenoberseite entspricht, so dass der Verschlussdeckel die Batteriezelle vollständig abdeckt. In einer nicht dargestellten Ausführung deckt der Verschlussdeckel 1 nicht nur eine Batterieeinzelzelle ab, sondern zwei oder mehr Batterieeinzelzellen.

In der Platte 11 und damit in der Oberseite und Unterseite 10 sind an einem Ende eine erste Polöffnung 2a und am anderen Ende eine zweite Polöffnung 2b eingebracht, die die Pole der Batteriezelle aufnehmen. Zwischen den beiden Polöffnungen 2a, 2b befindet sich in der Platte 1 bzw. der Oberseite und Unterseite 10 eine Öffnung 5, in der ein Einsteckteil wie ein Wassernachfüllstopfen, eine Spannungsanzeige, eine Temperaturanzeige und/oder eine Füllstandsanzeige insbesondere mit einer Datenübermittlungsvorrichtung eingesteckt ist/wird, das ein elektrischer Verbraucher ist und vorzugsweise mindestens einen Messsensor aufweist.

Die erste Polöffnung 2a ist über eine erste elektrische Leitung 4a mit der Zulauföffnung 5 verbunden, so dass das in der Öffnung 5 einliegende, nicht dargestellte Einsteckteil elektrisch mit dem Pol in der Polöffnung 2a verbunden ist. In gleicher Weise ist die zweite Polöffnung 2b über eine zweite elektrische Leitung 4b mit der Öffnung 5 und damit mit dem Einsteckteil elektrisch verbunden.

Im Ausführungsbeispiel verlaufen die elektrischen Leitungen 4a, 4b auf der Unterseite 10 der Platte 11 des Verschlussdeckels 1. Alternativ können aber auch die Leitungen 4a, 4b auf der Oberseite des Verschlussdeckels 1 oder innerhalb der Platte 11 des Verschlussdeckels verlaufen.

Hierbei können die elektrischen Leitungen außen nicht isoliert sein oder aber einen isolierenden Mantel besitzen. Die elektrischen Leitungen sind von einem elektrisch leitfähigem Kunststoff gebildet.

In allen diesen Ausführungen liegt ein Ende oder liegen beide Enden der elektrischen Leitungen 4a, 4b tangential an den Öffnungen 2a, 2b und 5 an und gehen über in einen Kontaktierungsring 12, der jeweils in dem zylindrischen Innenrand der Öffnung 2a, 2b, 5 liegt um eine sichere Kontaktierung zu erreichen.

Hierbei ist auch von Vorteil, dass eine elektrische Leitung 4a in etwa parallel zum Außenrand der Platte 11 auf einer Seite der drei Öffnungen und die andere zweite Leitung parallel zum gegenüberliegenden Außenrand auf der anderen Seite der drei Öffnungen verläuft, so dass die beiden Leitungen 4a, 4b voneinander sicher getrennt sind und Kriechströme vermieden werden.

## Patentansprüche

1. Verschlussdeckel (1) über mindestens einer Batteriezelle einer Industriebatterie insbesondere einer Antriebsbatterie mit mindestens zwei Polöffnungen (2a, 2b) zur Durchführung der Batteriepole und mit einem elektrischen Verbraucher in oder an dem Verschlussdeckel, **dadurch gekennzeichnet,**
• **dass** zwischen einer ersten Polöffnung (2a) einer Polarität und dem elektrischen Verbraucher und zwischen einer zweiten Polöffnung (2b) der anderen Polarität und dem elektrischen Verbraucher jeweils eine elektrische Leitung (4a, 4b) auf, unter oder in dem Verschlussdeckel angeordnet ist, die die Pole der Batteriezelle mit dem elektrischen Verbraucher elektrisch verbinden, um den elektrischen Verbraucher mit elektrischer Energie zu versorgen,
• **dass** die elektrischen Leitungen (4a, 4b) an Kontaktierungsringen (12) angeschlossen sind, die in den Polöffnungen (2a, 2b) einliegen,
• und **dass** die elektrischen Leitungen (4a, 4b) als elektrische Leiter einen elektrisch leitfähigen Kunststoff aufweisen,
• **dass** der elektrische Verbraucher in einem Wassernachfüllstopfen angeordnet ist, der in einer weiteren Öffnung (5) des Verschlussdeckels einliegt.

2. Verschlussdeckel nach Anspruch 1, **dadurch gekennzeichnet, dass** die elektrischen Leitungen (4a, 4b) auf der Unterseite, auf der Oberseite und/oder innerhalb des Verschlussdeckels (1) verlaufen.

3. Verschlussdeckel nach einem der vorherigen Ansprüche, **dadurch gekennzeichnet, dass** der elektrische Verbraucher einen Messsensor aufweist.

4. Verschlussdeckel nach einem der vorherigen Ansprüche, **dadurch gekennzeichnet, dass** die elektrischen Leitungen (4a, 4b) als Leitungskabel oder Leitungsband mit einem isolierenden Mantel versehen sind.

5. Verschlussdeckel nach einem der Ansprüche 1 bis 3, **dadurch gekennzeichnet, dass** die elektrischen Leitungen (4a, 4b) als Leitungskabel oder Leitungsband keinen isolierenden Mantel aufweisen.

6. Verschlussdeckel nach einem der vorherigen Ansprüche, **dadurch gekennzeichnet, dass** ein Ende oder beide Enden der elektrischen Leitungen (4a, 4b) tangential an den Öffnungen (2a, 2b, 5) anliegen.

## Claims

1. Closure cover (1) over at least one battery cell of an industrial battery, in particular a drive battery, having at least two pole openings (2a, 2b) for passing the battery poles through and having an electrical load in or on the closure cover, **characterized**
• **in that** a respective electrical line (4a, 4b) is arranged on, under or in the closure cover between a first pole opening (2a) of one polarity and the electrical load and between a second pole opening (2b) of the other polarity and the electrical load, which electrical lines electrically connect the poles of the battery cell to the electrical load in order to supply electrical power to the electrical load,
• **in that** the electrical lines (4a, 4b) are connected to contact-making rings (12) which are situated in the pole openings (2a, 2b)
• and **in that** the electrical lines (4a, 4b), as electrical conductors, comprise an electrically conductive plastic,
• **in that** the electrical load is arranged in a water refilling plug which is situated in a further opening (5) of the closure cover.

2. Closure cover according to Claim 1, **characterized in that** the electrical lines (4a, 4b) run on the bottom side of, on the top side of and/or within the closure cover (1).

3. Closure cover according to either of the preceding claims, **characterized in that** the electrical load comprises a measurement sensor.

4. Closure cover according to one of the preceding claims, **characterized in that** the electrical lines (4a, 4b), as a line cable or line strip, are provided with an insulating casing.

5. Closure cover according to one of Claims 1 to 3, **characterized in that** the electrical lines (4a, 4b), as a line cable or line strip, do not have an insulating casing.

6. Closure cover according to one of the preceding claims, **characterized in that** one end or both ends of the electrical lines (4a, 4b) bear tangentially against the openings (2a, 2b, 5).

## Revendications

1. Couvercle de fermeture (1) sur au moins une cellule de batterie d'une batterie industrielle, en particulier d'une batterie d'entraînement, comprenant au moins deux ouvertures polaires (2a, 2b) pour le passage des pôles de batterie et un consommateur électrique dans ou sur le couvercle de fermeture, **caractérisé**
• **en ce qu'**entre une première ouverture polaire (2a) d'une polarité et le consommateur électrique et entre une deuxième ouverture polaire (2b) de l'autre polarité et le consommateur électrique, respectivement une ligne électrique (4a, 4b) est disposée sur, sous ou dans le couvercle de fermeture et relie électriquement les pôles de la cellule de batterie au consommateur électrique pour alimenter le consommateur électrique en énergie électrique,
• **en ce que** les lignes électriques (4a, 4b) sont connectées à des bagues de mise en contact (12) qui sont insérées dans les ouvertures polaires (2a, 2b),
• et **en ce que** les lignes électriques (4a, 4b) présentent comme conducteurs électriques une matière plastique électriquement conductrice,
• **en ce que** le consommateur électrique est disposé dans un bouchon de remplissage d'eau qui est inséré dans une autre ouverture (5) du couvercle de fermeture.

2. Couvercle de fermeture selon la revendication 1, **caractérisé en ce que** les lignes électriques (4a, 4b) s'étendent sur la face inférieure, sur la face supérieure et/ou à l'intérieur du couvercle de fermeture (1).

3. Couvercle de fermeture selon l'une quelconque des revendications précédentes, **caractérisé en ce que** le consommateur électrique présente un capteur de mesure.

4. Couvercle de fermeture selon l'une quelconque des revendications précédentes, **caractérisé en ce que** les lignes électriques (4a, 4b) en tant que câble de conduction ou bande de conduction sont munies d'une gaine isolante.

5. Couvercle de fermeture selon l'une quelconque des revendications 1 à 3, **caractérisé en ce que** les lignes électriques (4a, 4b) en tant que câble de conduction ou bande de conduction ne présentent pas de gaine isolante.

6. Couvercle de fermeture selon l'une quelconque des revendications précédentes, **caractérisé en ce qu'**une extrémité ou les deux extrémités des lignes électriques (4a, 4b) sont tangentiellement adjacentes aux ouvertures (2a, 2b, 5).
